# EUROPEAN PATENT APPLICATION

(11) **EP 1 645 190 A1**
(43) Date of publication of application: **12.04.2006**
(21) Application number: 05021633.2
(22) Date of filing: 04.10.2005
(51) Int. Cl.: A23B 4/26, A22C 9/00

(54) **Churn for processing food products**

(30) Priority: 05.10.2004 IT MN20040025
(71) Applicant: INOX MECCANICA S.R.L., 46040 Goito MN (IT)
(72) Inventor: Bolzacchini, Giovanni, 46040 Goito (IT)
(74) Representative: Alagem Modiano, Lara S.

(57) **Abstract**

A churn (1) for processing food products, comprising a rotating drum (2) supported by an appropriately provided footing (6), further comprising a valve (7) for discharging liquid contained in the drum which is associated with the side wall of the drum (2), means for actuating the valve which are supported by the footing in a position below the drum, and means for stopping the rotation of the drum according to specific cycles when the drum is in such a position that the discharge valve faces the actuation means.

## Description

The present invention relates to a chum for treating food products.

It is known that in the field of machines for the food industry there are devices known as chums, which comprise a rotating drum for containing the products to be processed and is provided with means for heating such products.

Two of the operations that can be performed by means of said chums are thawing of products in blocks, such as for example meat or vegetables, and salting of cold cuts, saussages etc. meant to be eaten raw or cooked; both of these operations can be followed by an operation for rinsing the processed products.

All these operations have in common formation of water, at the end of the operation in case of thawing and rinsing and in an intermediate step in case of salting, and this water, which settles on the bottom of the drum, must be eliminated in order to be able to continue the processing of the product.

Users who work with conventional chums are forced to empty the drum of said chums of all of its contents, the water and the product, and then reintroduce only the product, so as to allow the process to continue, and it is immediately evident that this method clearly suffers drawbacks.

The aim of the present invention is therefore to provide a chum which allows to eliminate the water rapidly and with great operating convenience also as regards the necessary cleaning operations.

This aim is achieved by a chum for processing food products, according to the invention, comprising a rotating drum with an opening for loading and unloading the products which is supported by an appropriately provided footing and is provided with means for heating the products contained therein and with a device adapted to change the inclination of the footing by way of movements about an axis which is perpendicular to the rotation axis of the drum, characterized in that it comprises a valve for discharging liquid contained in the drum which is associated with the side wall of said drum, means for actuating said valve which are supported by the footing in a position below the drum, and means for stopping the rotation of the drum according to specific cycles when said drum is in such a position that said discharge valve faces said actuation means.

Further characteristics and advantages will become better apparent from the description of a preferred but not exclusive embodiment of the invention, illustrated by way of non-limiting example in the accompanying drawings, wherein:

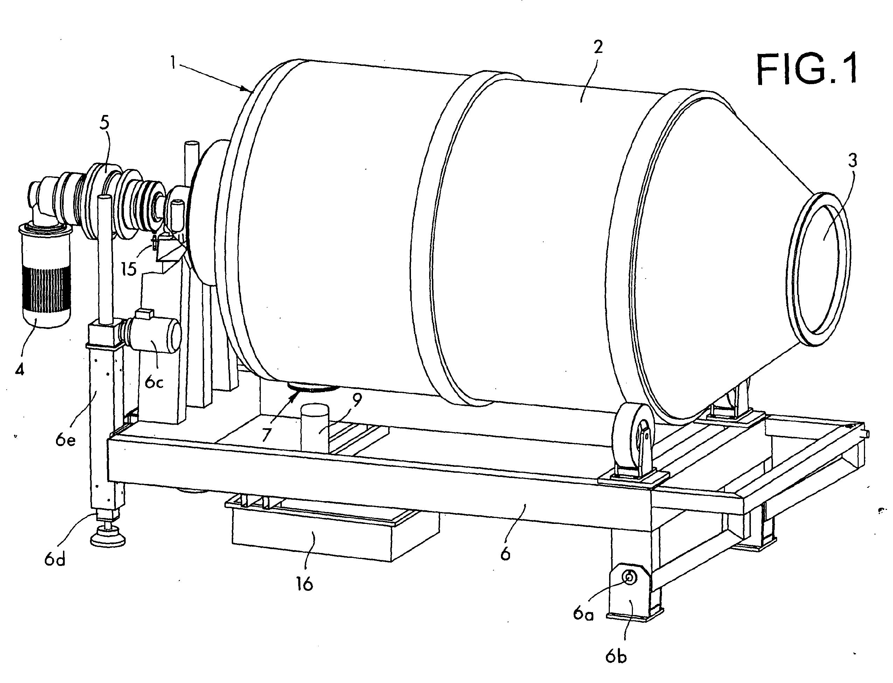

Figure 1 is a perspective view of the chum according to the invention;
Figure 2 is a view of the detail of the discharge valve in the closed position;
Figure 3 is a view of the detail of the discharge valve in the open position;

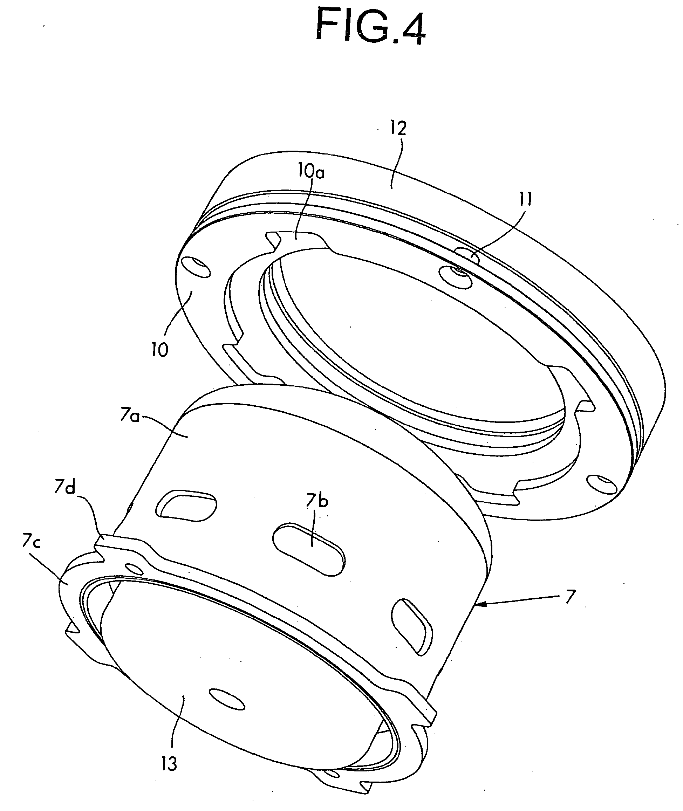

Figure 4 is a view of the discharge valve in a disassembled condition.

With reference to the figures, the reference numeral 1 generally designates the chum, which comprises a drum 2 with an opening 3 for loading and unloading the products, which is turned about its own longitudinal axis by means of a motor 4 with a reduction unit 5.

The drum, which is mounted on a footing 6, is provided with means (not shown in the figure) for heating the products contained therein and with means which are adapted to change the inclination of said footing by making it rotate about pivots 6a associated with ground supporting feet 6b.

Merely as a mention, said means comprise motors 6c, which are capable of producing the sliding, along feet 6d, of sleeves 6e which are rigidly coupled to the footing 6.

All this occurs in a known manner.

An important feature of the invention is the presence of a discharge valve, generally designated by the reference numeral 7, for the liquid contained in the drum 2, which is associated detachably, as better described hereinafter, with the side wall of the drum 2, and the presence of means for actuating said valve which comprise an actuation cylinder 8, which is supported by the footing 6 and actuates a pusher 9.

The valve 7 comprises a body 7a, which is provided with slots 7b which are open onto the internal space of the drum 2 and lead outside, and is further provided with a ring 7c, which is adapted to fit below a contrast ring 10 which protrudes, with the interposition of spacers 11, from a flange 12 rigidly coupled to the side wall of the drum 2.

The insertion of the ring 7c occurs so that tabs 7d of the ring are located at notches 10a of the contrast ring 10, and a subsequent rotation produces the detachable fixing of the valve 7.

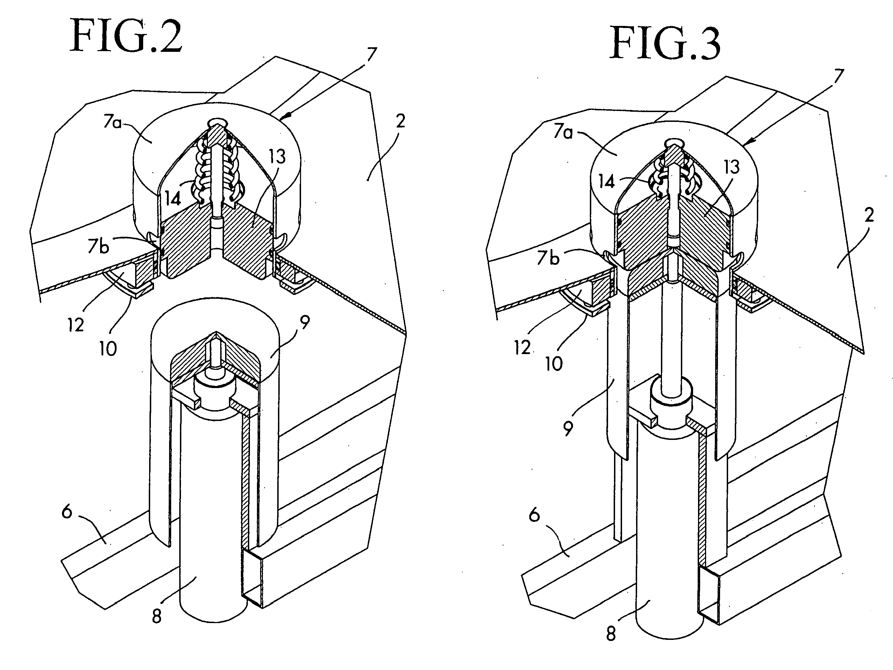

The body 7a of the valve 7 accommodates a flow control element 13, which is normally kept in the position for closing the slots 7b shown in Figure 2 by the action of a spring 14, and the flow control element is adapted to be moved into the position for opening said slots, as illustrated in Figure 3, by the pusher 9 actuated by the actuation cylinder 8.

To allow the opening of the valve 7, it is obviously necessary to provide the condition in which such valve perfectly faces the pusher 9, and this is done by a proximity sensor 15, which at the appropriate time, depending on the operating cycle that the chum performs on the product contained therein, stops the motor 4 so that the drum 2 is in such a position as to determine the required condition.

Following the opening of the discharge valve, the liquid contained in the drum 2, inclined appropriately, exits by gravity and collects within a tray 16 in order to be removed permanently.

The described invention is susceptible of numerous modifications and variations, all of which are within the scope of the inventive concept: thus, for example, the discharge valve associated with the side wall of the drum and the corresponding actuation means may assume any configuration, and the proximity sensor may be replaced with another position sensing device.

All the details may further be replaced with other technically equivalent elements.

In practice, the materials used, so long as they are compatible with the specific use, as well as the contingent shapes and dimensions, may be any according to requirements.

The disclosures in Italian Patent Application no. MN2004A000025, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A chum for processing food products, comprising a rotating drum with an opening for loading and unloading the products which is supported by an appropriately provided footing and is provided with means for heating the products contained therein and with a device adapted to change the inclination of the footing by way of movements about an axis which is perpendicular to the rotation axis of the drum, **characterized in that** it comprises a valve for discharging liquid contained in the drum which is associated with the side wall of said drum, means for actuating said valve which are supported by the footing in a position below the drum, and means for stopping the rotation of the drum according to specific cycles when said drum is in such a position that said discharge valve faces said actuation means.

2. The chum according to claim 1, **characterized in that** the discharge valve is associated detachably with the side wall of the drum.

3. The chum according to one or more of the preceding claims, **characterized in that** the discharge valve comprises a body provided with slots which are connected to the discharge and are open onto the internal space of the drum, and a flow control element which is normally in the position for closing said slots due to the action of a spring and is adapted to make contact, in order to assume an open position, with a pusher actuated by an actuation cylinder supported by the footing.

4. The chum according to one or more of the preceding claims, **characterized in that** the body of the discharge valve is provided with a ring which is adapted to be detachably associated with a contrast ring which protrudes, with the interposition of spacers, from a flange which is rigidly coupled to the side wall of the drum.

5. The chum according to one or more of the preceding claims, **characterized in that** the means adapted to stop the rotation of the drum according to specific cycles when it is in such a position that the discharge valve faces the corresponding actuation means comprise at least one position sensing device.

6. The chum according to one or more of the preceding claims, **characterized in that** the means adapted to stop the rotation of the drum according to specific cycles when it is in such a position that the discharge valve faces the corresponding actuation means comprise at least one proximity sensor.
